# EUROPEAN PATENT APPLICATION

(11) **EP 4 843 820 A1**
(43) Date of publication of application: **25.11.2026**
(21) Application number: 25177290.1
(22) Date of filing: 19.05.2025
(51) Int. Cl.: B60L 53/63, B60L 53/64, B60L 58/13, B60L 58/16

(54) **METHOD FOR CHARGING ELECTRIC VEHICLES OF A FLEET**

(71) Applicant: Siemens Aktiengesellschaft, 80333 München (DE)
(72) Inventor: GUPTA, Vivek Kumar, 91052 Erlangen (DE); LORIMER, Martin, Home (GB); HAASS, Stefan, NE31 1LX Hebburn (GB); INGERFELD, Moritz, 91058 Erlangen (DE); KUPPLER, Benjamin, 91058 Erlangen (DE)
(74) Representative: Siemens Patent Attorneys

(57) **Abstract**

A computer-implemented method is provided for charging a plurality of electric vehicles (A,B) within a fleet (F) of vehicles, the method comprising the steps of
- receiving (10) a routing plan (RP) for the fleet of vehicles for a first time window (T_{L}), wherein the routing plan (RP) comprises a set of schedules for the individual electric vehicles (A,B),
- performing (30) a computer-implemented simulation of the associated charging processes for a second time window (T_{M}) which is comprised within the first time window (T_{L}), wherein a computer-implemented optimization algorithm is used to optimize the charging parameters (P) of the respective simulated charging process with respect to the duration of the individual charging cycle, the cost of charging and/or a battery degradation due to charging,
thereby determining optimized charging plans (CP') for the charging cycles (C_{A1}, C_{B}) in the second time window (T_{M}),
and
- implementing (40) the optimized charging plans (CP') for the individual charging cycles (C_{A1},C_{A2},C_{B}) of the electric vehicles (A,B) by a computer-implemented control algorithm (SCC), which adjusts the actual charging parameters (SP) on the basis of the previously optimized charging plans (CP') and real-time data (IN_{L}) for physical and/or economic quantities on a third time scale (T_{S}) which is shorter than the length of the second time window (T_{M}).

Furthermore, a system for such a charging method and a corresponding computer program product are provided.

## Description

The present invention relates to a computer-implemented method for charging a plurality of electric vehicles within a fleet of vehicles, wherein a routing plan for the fleet of vehicles is received as input to the method. The invention further relates to a system for charging such a plurality of vehicles and a computer program product for carrying out the method.

Known methods for charging electric vehicles (EV) comprise computer-implemented methods for controlling the charging process. Examples include the software-controlled electrical load management for public EV charging stations or for privately run EV wall chargers. Such load management software typically controls the parameters of the charging process by using set points which can for example be influenced by input parameters such as measured battery temperature values, available power from local renewable sources and/or energy tariffs.

It is a goal of the commercial transportation and logistics segment to reduce greenhouse gas emissions by moving from the use of fossil fuels towards an increased use of electrically powered vehicles, ideally powered by green electricity. Key challenges in this transformation are the availability of sufficient power (influenced by the grid infrastructure) and the affordability of electrical energy, where the cost can be based on demand charges and/or energy charges. Another challenge is the increased time necessary for recharging the vehicles, compared to refilling a tank with a fossil fuel. If the battery of an electric vehicle is not at a sufficient charging state in time for a planned trip, this can lead to considerable delays which are typically not on the time scale of a few minutes, but rather of several hours. The resulting delays create a significant hurdle for the electrification of commercial vehicle fleets because they often result in losses of business opportunities or potential penalties. The associated challenges do not just concern the control parameters for the actual software-controlled charging process but also the planning procedures which aim to create routing schedules - not just for a single vehicle, but for a whole fleet - which are sufficiently robust with respect to changes in parameters which can influence the implementation of the charging process but are hard to predict many days in advance.

In order to minimise the risk of an insufficiently charged vehicle, a typical approach by commercial fleet operators is to charge every vehicle of the fleet to an essentially full charging state (e.g. between 95% and 100%) before its next trip, irrespective of the energy need of the actual mission. The vehicles are also usually charged as fast as possible, which can lead to high demand power. This approach can lead to unnecessarily long charging times before individual missions, to unnecessarily high energy cost and/or demand power cost and/or to an early degradation of the battery of the electric vehicle.

It is therefore a goal of the present invention to provide a method which addresses the above-mentioned challenges. In particular, a method for charging electrical vehicles of a fleet shall be provided, which allows an adherence to predefined time windows for the charging steps of the individual vehicles with a high probability (confidence level). In addition, an optimization of the charging processes with respect to other criteria such as energy cost, battery health and/or the observation of power constraints can favourably be achieved. Further goals of the invention are to provide a system and a computer program product for such a charging method.

These objects of the invention are achieved by claim 1 with respect to the method, by claim 14 with respect to the system and by claim 15 with respect to the computer program product.

The method according to the invention is a computer-implemented method for charging a plurality of electric vehicles within a fleet of vehicles, the method comprising the steps of
- receiving a routing plan for the fleet of vehicles for a first time window,
   wherein the routing plan comprises a set of schedules for the individual electric vehicles, the schedules including dwelling periods during which the electric vehicles are available for charging,
- performing a computer-implemented simulation of the charging processes within the corresponding dwelling periods, the simulation being performed for a second time window which is comprised within the first time window,
   wherein a computer-implemented optimization algorithm is used to optimize the charging parameters of the respective simulated charging process with respect to one or more economic, operational and/or electrical objectives, in particular comprising the duration of the individual charging process, the cost of charging and/or a battery degradation due to charging,
   thereby determining optimized charging plans (with sets of optimized parameters) for the charging processes in the second time window,
   and
- implementing the optimized charging plans for the individual charging processes of the electric vehicles by a computer-implemented control algorithm, which adjusts the actual charging parameters on the basis of the previously optimized charging plans and real-time data for physical and/or economic quantities on a third time scale which is shorter than the length of the second time window.

The fleet of vehicles can in particular be operated by a common fleet operator or by a group of fleet operators which are working together to operate the fleet. In other words, the operation of the vehicles is under a joint control, such that the trips of the individual vehicles can be organized within an overall routing plan in which trips and dwelling times for the individual vehicles are scheduled. The fleet does not need to consist exclusively of electric vehicles. In addition to the electric vehicles there can also be non-electric vehicles and/or hybrid vehicles with different types of engines. In any case, there are at least two vehicles within the fleet which are powered (fully or at least predominantly) by an electric engine. In principle, those electric vehicles can comprise road vehicles, electric boats, electric underwater vessels, electric aircraft, electric indoor vehicles and/or any combination of those vehicles. The invention is particularly advantageous for a fleet within a logistics operation such as a fleet of trucks or a fleet of busses. The vehicles can also be transport vehicles and/or mobile robots operating on a factory floor.

The "charging of an electric vehicle" refers to (re-)charging the battery or batteries of the vehicle with electrical energy such that it is ready to be deployed on a next trip (e.g. a transport mission). In the context of the present invention, this charging task is a multi-vehicle problem within a large parameter space. The number of EVs to be charged during the operation of the fleet is at least two but can be much higher. For example, the number of EVs concerned can be at least five and in particular at least ten. A typical fleet may for example comprise anywhere between 10 and a several 100 such vehicles which are operated according to a joint routing plan. In principle, at least for some of the considered vehicles, the "charging" may also be performed externally, such that a discharged battery of the vehicle is replaced by another battery recharged outside the vehicle. However, the advantages of the present invention are most relevant, if at least some of the considered vehicle batteries are recharged inside their respective vehicles.

The "routing plan" can be devised by the fleet operator(s) either manually or by an automated or semi-automated process. It comprises at least a set of scheduled time windows for a plurality of trips to be made by a plurality of vehicles and also a set of dwelling times which can be used for charging the vehicles. Not all of the vehicles of a given fleet need to be assigned trips in the routing plan, but at least a plurality of electric vehicles should be covered by it. In particular, the routing plan also comprises at least a plurality of scheduled time windows for the associated charging processes (these "charging processes" also being referred to as "charging cycles"). In addition to these scheduled time windows, the routing plan may contain much further information, for example data on the scheduled trips such as the respective departure location, arrival location, a specific route to be taken between these locations, properties of this route, information on the vehicle, the driver and/or the scheduled payload. For example, it may matter for the subsequent optimization if the payload needs to be refrigerated, if a driver cabin or passenger cabin needs to be air-conditioned and the like.

The routing plan is defined for a "first time window" which is by nature a "future time window" at the time when the planning takes place. This first future time window can cover a period of several days, for example a working week (five days), a calendar week (seven days) or a two-week period. In the context of this invention, this first time window will also be referred to as the "long time scale" or "long-term scale" T_{L}.

It is a characteristic feature of the present invention that a computer-implemented simulation is performed for the charging processes of the routing plan within a second future time window. The simulation can cover a sub-set of the charging processes in this second time window or (more preferably) all the charging processes that lie within the second time window. If a charging process is only partially within the second time window, the respective inside portion of it can be covered by the simulation step. The second future time window is comprised within the first future time window and is in particular shorter than the first future time window. Accordingly, the second time window will also be referred to as the medium or intermediate time scale T_{M}. This second future time window can cover a period of several hours, for example a period between six hours and two days. Such a medium-term scale is sometimes referred to as a day-ahead time scale.

The simulation on this intermediate time scale uses a computer-implemented simulation model to predict the associated charging processes. If charging steps are planned for more than one vehicle within the observed second time window, the simulation is again a multi-vehicle simulation. The simulation is used to predict characteristic values of the charging processes as a function of a set of input parameters. In particular, the amount of energy stored in the respective battery over time can be predicted as a function of parameters like a charging power (e.g. as a time dependent power profile), the temperature of the battery, the previous charging state and many other parameters that play a role. The simulation model is therefore a model of the physical reality describing at least a set of physical properties, e.g. of the battery, the employed charger, the connection cable and/or the environment. In addition to these physical properties, the simulation can also predict economic quantities like an expected cost of energy or use economic quantities as input values, e.g. an expected energy tariff as a function of time.

On the basis of this simulation, a computer-implemented optimization is performed in order to optimize one or more charging parameters. These charging parameters can for example comprise set points for the charging power profile and other control parameters used in the feedback loop in an actual implementation of the charging process. The optimization is carried out with respect to one or more optimization criteria. These can be economic, operational and/or electrical objectives. A particularly important operational criterion is the compliance with the planned duration of the respective charging cycle, in other words the duration of the regarded charging cycle. As an alternative to an optimization criterion, the compliance with the planned time window (i.e. not exceeding its length) can be used as a hard boundary condition for the optimization step. However, it can also be useful to finish a charging cycle before the scheduled end of the charging cycle in order to allow for some safety margin in case the actual implementation of the charging cycle differs from the plan due to unforeseen developments. In this case, an early termination of the charging cycle can be useful as a criterion of the optimization. In addition, one or more further optimization criteria can be used. One relevant economic criterion is the cost of charging which depends on the expected electricity tariffs as a function of time. Another relevant electric criterion is the health of the battery, in other words the avoidance of an unnecessary battery degradation, which also depends on the detailed parameters of the charging process such as the employed charging power, the temperature during charging, the number of overall charging cycles experienced during the life of a battery and/or the number of times a switch between different charging technologies (such as AC charging versus high-power DC charging) occurs. In a particularly favourable embodiment, the optimization is carried out by observing at least two of the before-mentioned optimization criteria and possibly more. Additional criteria can also be observed during the optimization, such as a minimization of green-house gas emission by increasing the use of renewable electrical energy (in particular by local renewable energy sources close to the charging stations). The different criteria can be assigned respective weights in order to represent their relative importance for the overall optimization.

Generally and independently of the details of the implementation, the optimization leads to a set of optimized charging plans for the charging cycles comprised in the second time window. Each charging plan comprises a set of optimized charging parameters. In a further step, these optimized charging plans are implemented within a real-time computer-implemented control procedure. The "real-time" aspect refers to the feature that real-time data are used as input to the control algorithm, in addition to the optimized charging plans derived on the basis of the simulation on the intermediate time scale T_{M}. The relevant time scale for the control loops for such a charging process is on a scale of about a second up to a few minutes. This time scale on which the relevant "real-time" data take effect is also referred to as the "live time scale" or "short time scale" T_{S}. Independent of the exact time horizon, the short time scale is the scale on which the control loops are implemented and on which real data affecting the control settings become available. It may also be referred to as an "intraday" time scale. In particular, the control algorithm is programmed to implement the pre-determined charging plans as closely as possible if the real-time data match the expected quantities for the respective values. However, if some real-time data deviate from the predictions, as will always be the case to some degree, the control-algorithm will react to these deviations in a predefined way. For example, the charging power may need to be reduced in reaction to a temperature reading which is lower than expected at the relevant point in time. The way in which the control algorithm reacts to its input values may in particular also involve a computer-implemented optimization, in this case an optimization on the short time scale. In particular, this short-scale optimization can also be performed with respect to the duration of the charging process and potential further criteria as described above.

The implementation of charging plans according to a combination of pre-determined parameters and real-time data is generally known in the art. A sample program suite that can achieve this is the Depot360 program suite by the company Siemens. The control procedure can generally be based on classical optimization algorithms and/or on machine learning models such as artificial neural networks. In principle, the same is also true for the simulation and optimization performed on the intermediate time scale.

A key feature of the method according to the present invention is that an optimization of the charging parameters takes place at least twice, i.e. once on the intermediate time scale within the simulation model and once on the short time scale in the actual control loop. An advantage of this is that the intermediate-scale optimization can be relatively accurate because on this time scale there will typically be relatively accurate predictions available for relevant input parameters like the weather, traffic conditions and energy tariffs. The accuracy on this time scale will be much higher than a forecast on the long-term scale which is e.g. used for verifying the feasibility of the route plan. Therefore, it is generally advantageous for the second time window to be shorter than the first time window such that the predictions for data within the second time window can also be made with a shorter lead time from the time when the prediction is made, thus enhancing accuracy. On the other hand, the predictions are still subject to uncertainty compared to the real-time data which will come in during the actual implementation of the charging cycles. However, the disadvantage of this inaccuracy is more than compensated by the possibility to allow more computing time and/or more computing resources when the optimization is carried out in advance on the basis of a simulation. In other words, the charging parameters are optimized first on a type of digital twin of the charging system on an intermediate time scale and then, once more, based on the real data, during the actual implementation. In this context, a "digital twin" refers to a model of the charging system that is not necessarily an exact model of all its physical subsystems, but rather an abstract model which describes the influence of the relevant charging parameters on the optimization objectives. When the simulation and optimization is performed at least a few hours ahead of the actual charging process, there is enough time to consider many more scenarios in the optimization and therefore to arrive at a better optimum with respect to the considered criteria, compared to a real-time optimization only. A better overall optimum will also be achieved because the effects over the whole second time window can be considered in the optimization. This is an advantage over a real-time optimization where only an instantaneous response to the input data can be derived. When real-time data are used, a part of the charging cycle is typically already elapsed, and the parameter set for the charging process cannot be optimized as a whole.

In summary, the presented method therefore allows the implementation of charging processes with an improved optimization with respect to early readiness of the charged vehicles and optionally one or more further criteria. The advantages of the charging system according to claim 14 and the computer program product according to claim 15 result in a similar manner to the above-mentioned advantages of the method. In general, the "computer implementation" of the described method refers to the use of any computer(s) for the relevant steps. Such computers can be part of cloud-based systems and can comprise any kind of electronic data-processing devices such servers, clients, embedded systems, edge devices, mobile electronic devices, single microchips and/or classical desktop or laptop computers. A cloud-based implementation of the charging system and the corresponding method is generally preferred.

Advantageous configurations and embodiments of the method according to the invention follow from the claims dependent on claim 1 as well as the following description. The advantageous features of the charging method can generally also be applied to the charging system and/or the computer program product and vice versa.

According to a favorable embodiment, the method comprises the additional step of performing a computer-implemented simulation of the charging cycles comprised (at least partially) in the first time window. In other words, at least one simulation step is carried out on the long-term scale in addition to the above-mentioned simulation on the intermediate time scale. The simulation on the long-term scale can in particular cover all charging processes comprised in the whole first time window which is covered by the provided route plan. As explained before with respect to the intermediate time scale, those charging cycles that are comprised only partially in the first time window can be simulated to the extent that they lie within this time window. Generally favorably, the simulation on the long-term scale can precede the simulation on the intermediate time scale for a given charging cycle. Similarly, the time distance between carrying out the simulation step and the actual point in time for which the charging cycle is planned can (at least on average) be shorter for the intermediate term simulation. The long-term simulation thus gives a first estimate of the simulation result which can be refined in the following intermediate term simulation. This refinement can for example be achieved by a more accurate simulation due to an increased computational effort and/or by a more accurate prediction of input parameters of the simulation once the time steps to be simulated come closer.

The preceding long-term simulation can be used to determine at least a first estimate for a required state of charge and/or a required time to charge for the individual charging cycles, preferably for each charging cycle comprised in the first time window. These first estimates can later be refined by the simulation on the intermediate time scale. The required state of charge can be derived from data on the planned vehicle mission following the respective charging cycle. Its estimation can be based on the vehicle type and the planned trip length and, optionally, one or more further parameters such as:
- one or more properties of the vehicle type,
- one or more properties of the specific vehicle,
- an ambient temperature as a function of time,
- one or more topographical properties of the planned trip following the respective charging cycle,
- one or more properties of the planned payload of the planned trip,
- information on the expected traffic conditions of the planned trip,
- information on the driver of the planned trip.

The (minimum) required time to charge for an individual planned charging cycle can be estimated based on the predicted required state of charge. In addition, the estimate can be based on the vehicle type, an estimate for the previous state of charge and, optionally, one or more further parameters such as:
- an estimate for the start time of the charging cycle,
- the type of charger to be used for the charging cycle,
- the type of charging connector to be used for the charging cycle,
- an estimated value for the energy tariff, in particular as a function of time,
- an estimated value for the ambient temperature, in particular as a function of time,
- an estimated value for the battery temperature, in particular as a function of time,
- one or more physical properties of the battery,
- one or more physical properties of the battery management system,
- one or more specifications of the target charging curve of the vehicle,
- one or more specifications for a pre-conditioning of the battery and/or vehicle cabin before the charging process.

Generally and independently of the exact parameters, algorithms and results, the long-term simulation of the required state of charge and/or the required time to charge can be used as a first step to verify if the received routing plan is feasible. In this sense, "feasibility" is understood to be a sufficiently high confidence that the necessary charging levels can be reached before the scheduled departure times for all planned vehicle missions in the route plan. If a success probability of a certain pre-defined level (e.g. above 95%) is reached, then the method can proceed to the intermediate term simulation and to the real-time implementation of the charging processes. In case the confidence level is not high enough, the route plan can be "flagged" in the sense that feedback is given to the planner that a revision is necessary to achieve a higher confidence. In this case, an updated version of the route plan can be received before proceeding to the further steps on the intermediate and short time scales on the basis of the updated route plan.

Optionally, the long-term simulation can also be used to provide a first estimate of optimized charging plans for the charging cycles within the first time window. In other words, there can also be a computer-implemented optimization of charging parameters on the long-term scale. In this case, the obtained charging parameters can be treated as first estimates which can later be refined by the following intermediate-term simulation and optimization.

According to a generally preferred embodiment, a required state of charge to be achieved during an individual planned charging cycle for the associated electric vehicle can be predicted by a computer-implemented simulation, based on at least the vehicle type and the planned trip length following the respective charging cycle. Such predictions can in particular be made for all charging cycles comprised in the route plan. In general, these predictions can be made on the long time scale, on the intermediate time scale or on both these time scales. In particular, first estimates for the required states of charge can be obtained on the long time scale, and these values can be refined by a more accurate simulation procedure and/or based on more accurate input values on the intermediate time scale. The refinement for the intermediate-scale simulation can for example be achieved by basing the estimation on more of the above-mentioned list of parameters, thereby increasing the accuracy of the model, on which the simulation is based.

Generally, and independently of the time scale on which the prediction is made, the predicted values for the required state of charge can be used as a basis (as input) for the computer-implemented optimization of the associated charging processes. This can in particular be the optimization on the intermediate time scale. Optionally however, a coarse optimization can also be performed on the long time scale as a preceding step, and the optimized parameters of this coarse optimization can then be refined on the intermediate time scale. The implementation of the charging process can then be based on the refined parameter set.

According to a generally preferred embodiment of the intermediate-scale simulations, the simulation results obtained for the second time window can be used to verify that the set of optimized charging parameters will lead to a successful implementation of the respective charging cycle within an allocated time period for this charging cycle within the routing plan. Again, such a verification is not a guarantee for a successful implementation, as real-term data can differ from the input parameters of the simulation. However, the verification can be based on reaching a pre-defined confidence level. A necessary condition for the verification can for example be that the charging process can be completed within the simulation in time before the next planned departure time of the respective vehicle. To add an element of safety, it can also be required that a pre-defined temporal safety margin is observed between the end of the (simulated) charging cycle and the planned departure time. Such a condition can in particular be used as a boundary condition to be observed during the computer-implemented optimization procedure. If a candidate parameter set does not lead to such a successful verification within the simulation, the optimization needs to be continued until a parameter set is found which complies with the time constraints.

According to a preferred embodiment of the method, the optimization within the second time window is carried out by
- defining an objective function which comprises a term related to the duration of the individual charging cycles, a term related to the cost of charging and/or a term related to a battery degradation due to charging and
- extremizing the objective function based on the simulation of the charging processes within the second time window by varying the charging parameters, thereby obtaining an optimized set of charging parameters within the second time window.

In other words, a classical minimization or maximization algorithm can be applied to a pre-defined objective function which represents the relevant optimization criteria. In particular, one such criterion relates to the duration of the individual charging cycles. In particular, the objective function can comprise a reward term for finishing before the required time limit (i.e. the hard limit which is used to constrain the optimization). Additionally or alternatively, the objective function can comprise a cost term representing the cost of electricity which can vary as a function of the charging parameters to be optimized and which depends on time-dependent electricity tariffs. Additionally or alternatively, the objective function can comprise a cost term or reward term representing the influence of the charging parameters on the vehicle battery degradation due to charging. The different optimization criteria can enter the objective function with associated weights which can be used to prioritize the optimization procedure with respect to conflicting or at least competing goals. The optimization can for example be carried out on the basis of a classical, rule-based algorithm. Alternatively (or additionally), the optimization can also be based on a machine-learning algorithm, e.g. it can be performed by an artificial neural network.

According to a generally preferred embodiment of the method, the charging parameters optimized within the computer-implemented optimization comprise one or more of the following parameters:
- a time-dependent profile of the charging power,
- a trigger for starting a preconditioning process, in particular a preconditioning process for the battery.

These are relevant parameters which critically influence the performance of the charging processes with respect to the above-mentioned criteria. In particular, the relevant charging parameters can be optimized for all charging cycles comprised in the relevant second time window for which the optimization is performed. The preconditioning process can for example be a preconditioning process controlled by an internal battery management system of the vehicle and/or controlled by the charger. The details of this preconditioning process are therefore not under the direct control of the described method, but a timing trigger can be provided to start such a preconditioning process. The actual charging process then starts after completion of the preconditioning process. Therefore, the time of this trigger can also influence the performance of the charging system with respect to the above-mentioned criteria.

According to a preferred implementation, the simulation within the second time window can be based on one or more of the following input values:
- information on the planned trip, in particular on topographic properties, payload and driver,
- information on weather data, such as expected rain, freezing, wind, humidity etc.,
- information on the vehicle,
- information on the charger,
- an estimated value for the ambient temperature, in particular as a function of time,
- an estimated value for the energy tariff, in particular as a function of time,
- an estimated electrical power available from a local renewable electricity source.

These are typical input values for a meaningful prediction of the relevant performance criteria as mentioned above. Increasing the number and accuracy of the considered input values can significantly increase the accuracy of such a simulation. If a long-term simulation and an intermediate term simulation are performed sequentially, the number and/or accuracy of the considered input values can be increased when progressing to the intermediate time scale, thereby improving the accuracy of the obtained simulation result.

According to generally preferred embodiments of the invention, the electric vehicles to be charged by the method can be trucks, for example trucks of a logistics operation or as part of a corporate supply chain. Alternatively, the vehicles can be busses, for example busses of a local public transport operation. Alternatively, the vehicles can be electric transport vehicles for use within an industrial facility, e.g. vehicles for transporting parts or materials within an industrial manufacturing facility or mobile robots used in such an industrial site.

According to a generally preferred embodiment of the method, the receiving, simulation and/or implementation steps are repeated iteratively as time progresses. In particularly they are each repeated for shifting time windows. This kind of iterative repetition can be performed on the long time scale, the intermediate time scale, the short time scale or any combination thereof. Most preferably, an iterative repetition is performed on all three relevant time scales. The "shifting time windows" can be implemented such that for any two consecutive iterations, the respective (long, medium or short scale) time window is moved along by a fixed increment, in particular within a closed loop. For the long and intermediate time scales, the increment can be chosen such that two consecutive time windows (on the same scale) will overlap in time or, alternatively, that they can be joined seamlessly with each other. In principle, there can also be gaps between consecutive time windows within a common time scale. For example, if there are longer time periods within the routing plan without any scheduled charging cycles it is not necessary to simulate those "vacant" time periods on the intermediate time scale. Similarly, a seamless implementation on the short time scale is only necessary for those periods where a charging is actually planned.

The repetition frequency of iteratively repeating the above-mentioned steps can generally be chosen differently, such that it is adapted to the respective time scale. In particular, the simulation and optimization on the intermediate time scale can be repeated more frequently than the receiving step on the long scale. The implementing step occurs rather continuously, but if each change in a set point is seen as a separate "iteration", then the implementing step is also preferably repeated more frequently than the repetition rate of the simulation and optimization.

As explained above, it is generally advantageous that the second time window is shorter than the first time window by at least a factor of two, more preferably by a factor of three or more. This generally allows a significant improvement in the quality of predicted input values by the time the simulation and optimization are carried out for a given portion of the route plan (or more precisely: the charging cycles comprised in this portion). More generally it can be said that, with respect to a given charging cycle, the simulation on the intermediate time scale can be carried out later in time than the receiving step on the long-term scale. In other words, the simulation and optimization are carried out closer in time to the actual charging and departure time than the original planning of the route (at least on average). This allows a simulation and optimization on the basis of sufficiently accurate estimates for the relevant input values.

Further advantages and details of the invention may be found in the exemplary embodiments described below and in the drawings, in which:
Figure 1 shows a schematic representation of a number of vehicles within a fleet,
Figure 2 shows an illustration of the time scales on which the method is carried out,
Figures 3 and 4 show an overview of the flow of information between various method steps,
Figure 5 illustrates the estimation of the required state of charge,
Figure 6 illustrates the estimation of the required time to charge and
Figure 7 further illustrates the flow of information for the intermediate-scale parameter optimization and the real-time control.

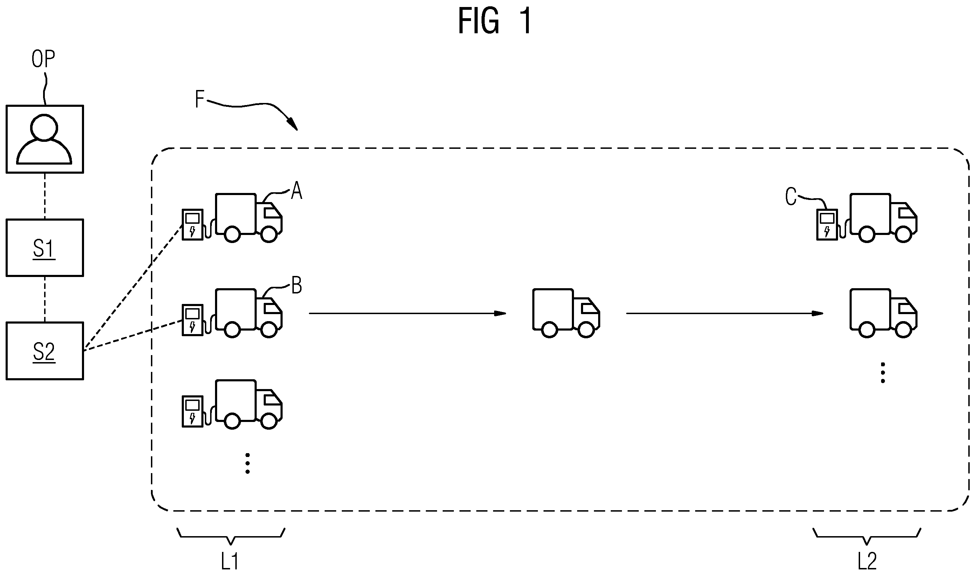

Figure 1 shows a schematic overview of a fleet F of vehicles, at least some of which are electric vehicles. By way of example, two of those electric vehicles are labelled as A and B, though many more such EVs may be comprised in the fleet. The fleet F is under the control of a common operator OP which may be a person or a corporation, such as a logistics company for a logistics fleet or a bus operator for a fleet of passenger transport busses. The left side of the drawing shows a planning system S1 and a charging system S2 which are both under the control of the fleet operator OP. The planning system S1 can be a tool for automatically or semiautomatically establishing a routing plan for the vehicles A,B,... according to the business preferences of the operator OP. Commercial software tools for establishing such routing plans are generally known. The resulting routing plan is typically a schedule of vehicle missions to be covered by the vehicles A, B,... of the fleet F. This schedule may comprise scheduled mission times when a given vehicle is on route, e.g. from a first location L1 to a second location L2. Those locations L1 and L2 may for example be sites of a logistics operations or bus depots. In between those sites, the vehicles may be scheduled to cover a predetermined route, e.g. for transporting goods or passengers. And the scheduled routes may require the concerned vehicle to travel to one or more pre-determined intermediate destinations on the way. The routing plan may further comprise information on the payloads to be transported and the drivers to drive the respective vehicles. In between the scheduled routes, or at least between some of them, the routing plan comprises scheduled charging periods, during which the electric vehicles A, B,... are to be charged with electrical energy. This can be done at one or more charging stations L installed at the locations L1, L2, ... which belong to the fleet operator OP. Additionally, it is possible to schedule some charging periods at public charging stations, though this is generally not the preferred method due to higher cost and a lack of control of the charging processes. For those charging periods, which are to be carried out at the on-site chargers C on the sites of the fleet operation, the charging can be controlled by the charging system S2 and by the method according to the present invention, as will be described in more detail below.

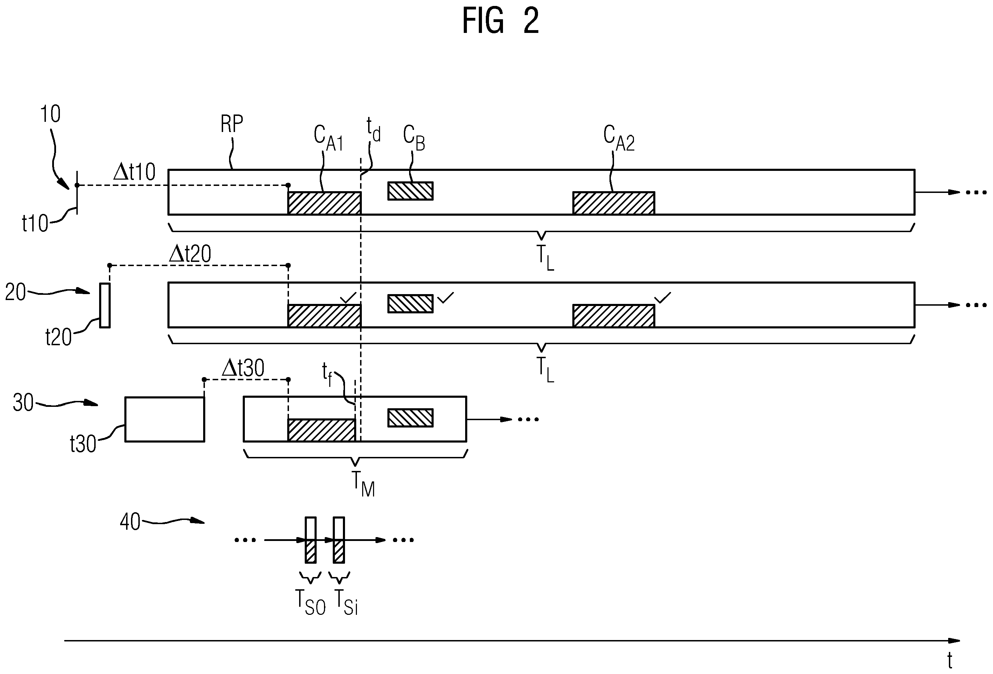

Figure 2 shows a schematic illustration of steps involved in a charging method according to a first embodiment of the invention. The method serves to charge electric vehicles A, B, ... within a fleet F of vehicles, similar to the fleet F of Figure 1. Figure 2 illustrates the time scales on which the method steps are carried out and for which the individual plans, models and estimations apply. Accordingly, the horizontal axis represents the time t. The method comprises a step 10 which involves the receiving of a routing plan RP, in particular to be used as input for the further steps. This routing plan RP can contain routing information and dwelling times, as explained above. The routing plan RP is set up for first time window T_{L} which is a future time window with respect to the point of time t10, when it is received. The routing plan RP comprises a series of scheduled charging periods for the electric vehicles A,B,... of the fleet F. Here, two representative charging periods C_{A1} and C_{A2} are shown for vehicle A and one representative charging period C_{B} is shown for vehicle B. In a real routing plan, the number of vehicles and/or the number of charging periods can be much higher. Devising an optimized routing plan with respect to the business interest of the operator OP is a complex multi-dimensional problem, the complexity of which increases significantly with the size of the fleet F. The optimized routing plan RP can be transmitted from the planning system S1 to the charging system S2. This receiving step 10 can in particular occur at an early time t10 with respect to the other steps of the method. The length of the first future time window T_{L} for which the routing plan RP applies is of a comparatively long time scale, e.g. of the order of several days or one to two weeks. Between the time t10 of the receiving step 10 and the beginning of the first charging period within this route plan, there is a significant head room, marked here as Δt10. This temporal head room (lead time) of the received routing plan RP can also be of the order of at least one day.

In the current example, the method comprises a further step 20, which is generally optional. This step 20 involves a computer-implemented simulation to estimate one or more properties of the charging processes covered by the routing plan RP. Compared to the further simulations described below, this step is a relatively long-term estimation of those properties in the sense that the regarded time window T_{L} is comparatively longer and/or the lead time Δt20 between finalizing the prediction and the start of the first charging period is comparatively longer. In this example, the simulation of step 20 is used to predict properties of the charging periods covered by the whole first time window T_{L} which is the same time window T_{L} covered by the routing plan RP.

The simulation 20 may involve predicting the required state of charge of the respective vehicle at the end of each charging period C_{A1}, C_{A2}, C_{B}, ... comprised in the routing plan RP. However, other properties may also be simulated in this step, such as the required time to charge for each charging period C_{A1}, C_{A2}, C_{B}. Such predicted values for the required times to charge can be used as a basis for an early simulation-based validation of the received routing plan RP. In other words, the routing plan RP can be accepted for further use according to the described method, in case the estimated times to charge are within the time periods allocated for the charging cycles in the routing plan RP. In Figure 2, a positive verification of the charging periods in the routing plan RP is indicated by check marks. In case the allocated charging periods cannot be verified by the estimated times to charge, the routing plan may alternatively be "flagged" in the sense that a revision and update is requested from the planning system S1 before further processing according to the described method. However, if the confidence in the viability of the received routing plan RP is high enough even at the planning stage, the long-term simulation of step 20 may also be omitted. Such a high confidence may for example be reached by allowing sufficiently large safety margins for the charging periods. Conversely, when the additional long-term simulation 20 is carried out, this may allow devising a more aggressive routing plan RP which may lead to more business opportunities for the fleet operator OP because the vehicle readiness for actual mission tasks can be increased.

In any case, the charging method comprises a step 30, which involves performing a computer-implemented simulation and optimization of the charging cycles C_{A1} and C_{B} which are contained in a second time window T_{M}. This second time window T_{M} covers a shorter portion of the first time window T_{L}. The time period during which the simulation and optimization tasks are performed is indicated as t30. In contrast, the time period for which the planned processes are modelled is labelled as T_{M}. The lead time between finalizing the modelling step 30 and the beginning of the first charging period C_{A1} is marked as Δt30, in analogy to the other lead times Δt10 and Δt20. In particular, the lead time Δt30 for the intermediate scale modelling step 30 is shorter than the lead times Δt10 and/or Δt20. As a result, more precise input data are available (at least on average) when the modelling step 30 is carried out. As a result of this intermediate-scale modelling step 30, an optimized parameter set for the regarded charging cycles C_{A1} and C_{B} is obtained, as described in more detail below. The modelling step 30 can also comprise a model-based verification of the obtained parameter set to ensure that for a given charging cycle, e.g. C_{A1}, the simulated finishing time reached t_{f} is before the scheduled departure time t_{d} of the corresponding vehicle for its next mission. Optionally, compliance with a predefined timing buffer may be required as a prerequisite for successful verification. Only if a verification is achieved within the simulation will the modelling step 30 be terminated, and the optimized parameter set will be passed on for implementation. If a candidate parameter set cannot be verified in this fashion, the optimization will be continued in the sense that further iterations will be performed before an optimized parameter set is identified and passed on.

The charging method further comprises an implementation step 40, during which the actual charging processes take place on the basis of the optimized parameter sets obtained in step 30. This implementation 40 is carried out by a computer-implemented control algorithm in real time. In other words, a control feedback is implemented, e.g. based on optimized set points determined by the previous modelling step 30. In addition to these optimized set points, real-time data are used as input to the control process, such as measured physical data obtained from sensors and/or economic quantities like energy tariffs obtained via a communication interface. The time scale on which these feedback mechanisms take place is short compared to the length of the time windows T_{L} and T_{M}. Additionally, it is typically short compared to the above-mentioned lead times Δt10, Δt20 and Δt30. Accordingly, one step of the control process is represented by a short-scale time window T_{S}. However, the implementation of the charging processes is typically not a single short step. Instead, a series of adjustments of the control parameters is carried out consecutively in an iterative fashion. To illustrate this, the implementation is represented by two exemplary time steps T_{S0} and T_{Si} of this iteration in Figure 2. The arrows before, between and after indicate that there are many more of those control steps to implement a full charging period, and in particular all charging periods contained in the route plan RP.

Similar to this consecutive repetition of step 40, the modelling step 30 can also be repeated consecutively. In particular, step 30 can be repeated iteratively for a moving second time window T_{M}, as time progresses as indicated by the corresponding arrow and dots. Such an iterative repetition will in particular be necessary in order to model the charging periods of the full route plan RP if the second time window T_{M} is shorter than the first time window T_{L}. In addition, even the planning and simulation on the long-term scale T_{L} can be repeated consecutively in an iterative process, as indicated by the arrow and dots, in order to operate the fleet for a longer period of time. The time window T_{L} can in particular be moved iteratively with a temporal overlap with each preceding time window T_{L}, for example to allow a kind of week-ahead planning on each day of the week. In a similar fashion, the intermediate-scale simulations 30 can also be carried out with iteratively shifting but overlapping time windows T_{M}. Alternatively, the consecutive second time windows T_{M} can be patched together (with or without gaps between the charging cycles) in order to cover all charging cycles within the corresponding route plan RP.

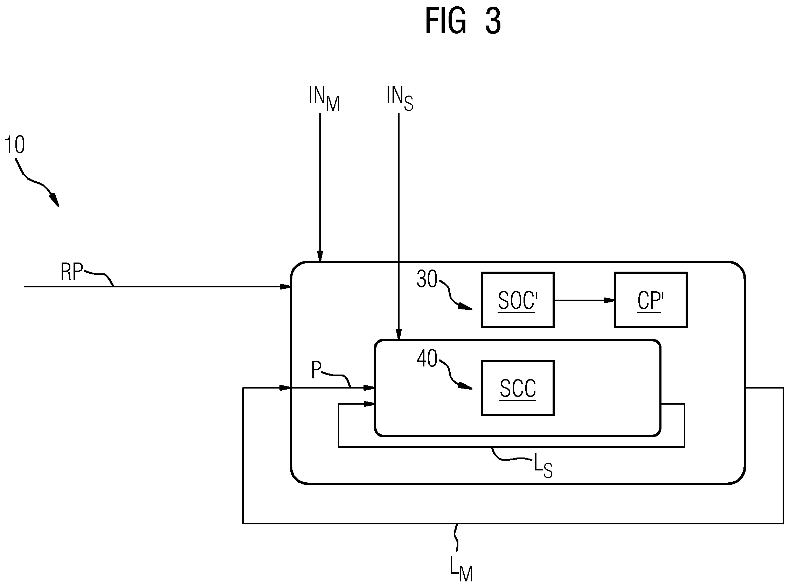

Figure 3 shows an overview of the flow of information between various method steps 10, 30 and 40 for another embodiment of the charging method. These steps correspond to the steps with the same labels in Figure 2. In this example, the optional step 20 is omitted. In step 10, the routing plan RP (established for the long-term scale T_{M}) is received to be used as input for the intermediate-scale modelling step 30. A further set of input parameters IN_{M} is used as a basis for the corresponding simulations within step 30. This set of input parameters IN_{M} may comprise physical properties such as temperatures and energy level of batteries as well as topographical information on the planned routes or economic properties such as a forecast of energy tariffs. At least some of these input parameters IN_{M} may be forecasts for values in the sense that they are subject to uncertainty. The accuracy of these estimates typically depends on the corresponding lead time Δt30. If the intermediate-scale modelling 30 is repeated iteratively with a shifting time window and the time windows overlap such that one charging process is modelled several times, then the accuracy of the modelling results may improve with the iterations as the accuracy of the input values IN_{M} improves over time. As an example of the modelling results, a prediction of the required state of charge SOC' for a given planned vehicle mission may be obtained on the basis of a simulation model. This required state of charge SOC' may be used as a basis for a computer-implemented optimization procedure which yields a set of optimized charging parameters within a charging plan CP' (smart charging parameters). This charging plan CP' for example comprises sets of optimized parameters P for the charging cycles A1 and B within the specific intermediate-scale time window T_{M} in the example of Figure 2. In a broader context, the optimized charging plans CP' comprise sets of charging parameters (e.g. in the form of set points for a control procedure) which are obtained by a computer-implemented optimization of the modelled charging cycles within the regarded time window T_{M}. In a real-life scenario, such a time window T_{M} may comprise many more charging cycles for many more vehicles which at least partially overlap in time. Correspondingly, the optimization task is a complex multi-parameter optimization with respect to the charging parameters of many vehicles. The obtained optimized parameter sets P are handed down as input to the implementation step 40, which is performed on a shorter time scale T_{S}. Within step 40, a computer-implemented smart charging control procedure SCC is carried out, as explained above.

In addition, the results of the intermediate-scale modelling step 30 can be used as input to a further such modelling step 30, if this intermediate-scale modelling is repeated in an iterative fashion with a moving time window T_{M}, as explained above. At least for some physical parameters, the modelled values of the previous iteration can be used as input for the next iteration, e.g. for temperature values and the charging states of the vehicles evolving over time. This type of simulation-based feedback is indicated by the loop L_{M}. During the actual implementation 40, a similar "physical feedback" takes place on a shorter time scale, as indicated by the loop L_{S}. Any further input to the control step 40 in the form of real-time or other data is labelled as IN_{S}. In contrast to the estimated input values IN_{M}, these are typically real measurement values or other real data influencing the control process.

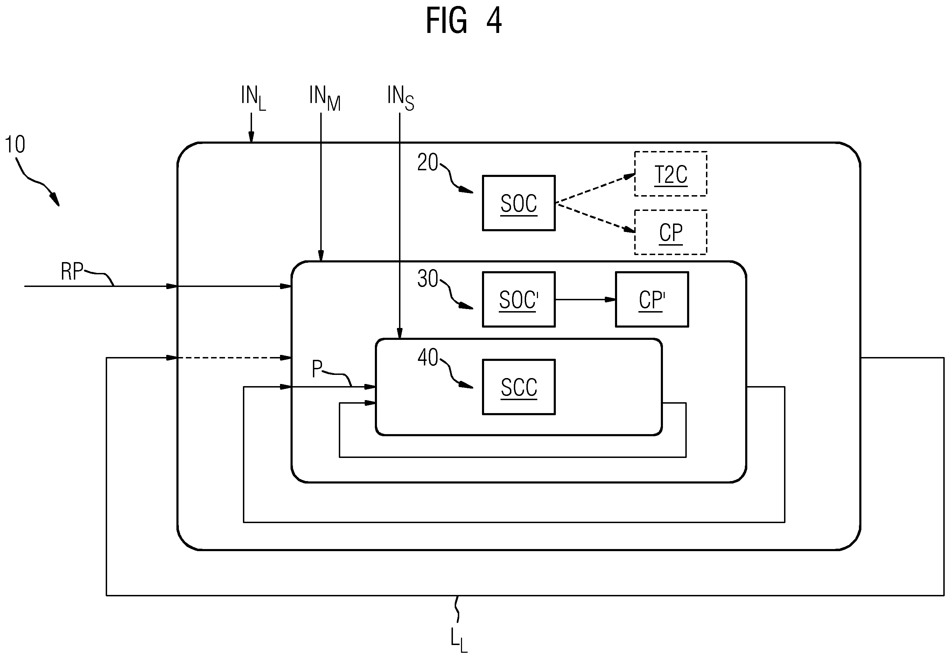

Figure 4 shows an overview of the flow of information between various method steps for another embodiment of the charging method. In this example, the method steps 10, 30 and 40 are carried out in a similar way as in the example of Figure 3. In addition, the optional step 20 is carried out on a long-term scale, in particular between the receiving 10 of the route plan RP and the intermediate-term modelling step 30. Step 20 is an additional long-term simulation step, as explained above. It uses input data IN_{L} which are usually estimates of relevant values available on the corresponding long-term scale. If the long-term simulation is carried out iteratively for continuously moving time windows T_{L}, there can be a corresponding simulation-based feedback loop L_{L} to model the continuous evolution of parameters similar to the feedback loop L_{M} for step 30. The long-term simulation step 20 can for example yield a first estimate for the required state of charge SOC. This can later be refined to a more accurate prediction SOC' by the simulation 30 on the intermediate-time scale, when more accurate input values IN_{M} become available. Optionally, an estimate for the required time to charge T2C can be derived from the estimated required state of charge SOC. This estimate for the required time to charge T2C can be used to check if the routing plan RP is viable or if it is too aggressive and needs revision, as explained above. Additionally or alternatively, a first estimate of an optimized smart charging parameter set CP can already be determined, based on the long-scale simulation. In this case, a computer-based optimization can already be carried out on this longer time scale, similar to the optimization with step 30 but generally with a reduced accuracy of the involved predictions. This first estimate CP can be refined to a more optimized charging plan CP' by step 30 based on the more accurate intermediate-scale model.

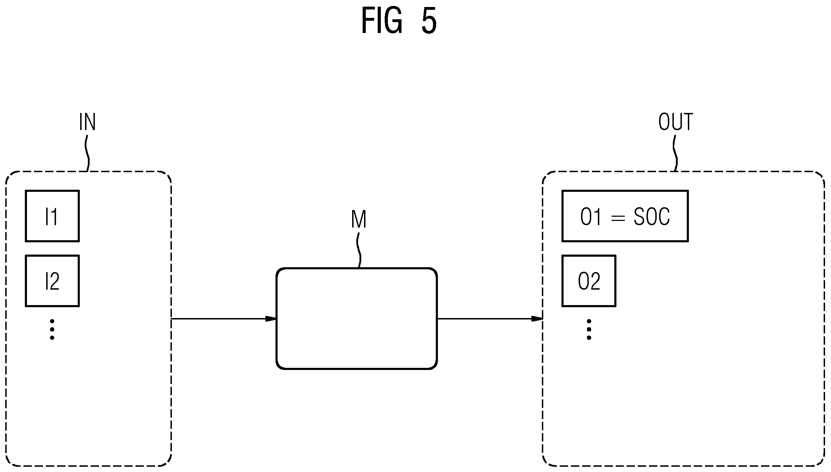

Figure 5 shows a very schematic illustration of how a required state of charge SOC may be predicted by a computer-implemented calculation. In general, such a computation may be carried out within the modelling step 20 and/or the modelling step 30. The calculation is based on a model M which is a model representing at least some of the physical elements and processes involved in the charging of the electric vehicles. This model M may be a ruled-based model with physical equations for calculating a set of output values OUT as a function of a set of input values IN. Alternatively, the model M may be a model based on artificial intelligence (e.g. a machine learning model implemented in an artificial neural network) configured to generate an output OUT which depends on a set of input values IN. The properties of such a machine-learning model may be pre-trained on the basis of historical measurement data and/or on the basis of rule-based modelling. The individual input values I1, I2, ... in the input data set may comprise at least the vehicle type and the planned trip length of the respective vehicle following the considered charging period. Additionally, one or more of the following parameters may be contained in the input data set IN:
- one or more properties of the vehicle type,
- one or more properties of the specific vehicle,
- an ambient temperature as a function of time,
- one or more topographical properties of the planned trip following the respective charging cycle,
- one or more properties of the planned payload of the planned trip,
- information on the expected traffic conditions of the planned trip,
- information on the driver of the planned trip.

The higher the number and/or accuracy of the considered input values, the better the estimation of the output values will become. The output data OUT can also comprise several individual values O1, O2, ... such as the required amount of energy for the upcoming vehicle mission (e.g. in kWh), in addition to the value for the required state of charge SOC.

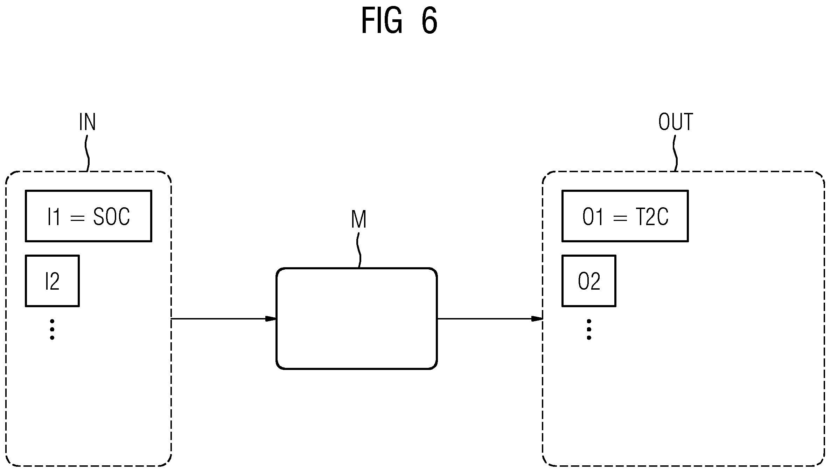

Figure 6 shows a very schematic illustration of how a required time to charge T2C may be predicted by a computer-implemented calculation. This computation also may be carried out within the modelling step 20 and/or the modelling step 30. Again, the calculation is based on a model M which is a model representing at least some of the physical elements and processes involved in the charging of the electric vehicles. The model M may for example be a rule-based model, a machine-learning model or a combination thereof, as explained above. The input data set IN may comprise the required state of charge SOC, obtained according to the calculation of Figure 5 and optionally one or more further input parameters, such as a temperature, a physical property of the vehicle, a physical property of the charger and the like.

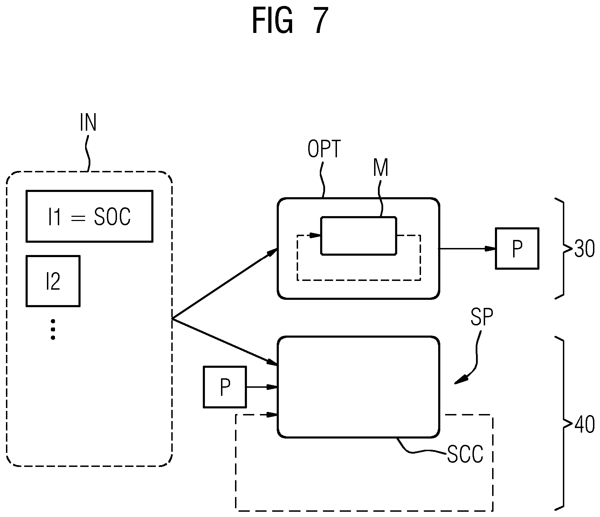

Figure 7 further illustrates the flow of information for the intermediate scale parameter optimization of step 30 and the real-time control of step 40 for an embodiment of the invention. This figure serves to illustrate that the modelling step 30 is essentially the generation of a digital twin of the actual implementation of the charging process in step 40. Therefore, a corresponding (or at least overlapping) set of input values IN is used for those two steps 30 and 40, as indicated by the common box on the left-hand side of the figure. For example, a previously determined value for the required state of charge SOC may be handed over as an input value I1 to both the modelling 30 and the implementation steps 40. Other input values may be similar in their nature, such as temperature values, values for energy tariffs, properties of the vehicle and the like. The input values only differ in that for the modelling step 30 mostly predictions will be used and for the implementation step 40 mostly real-time data will be used.

In the modelling step 30, a computer-implemented optimization OPT is carried out based on a simulation of the charging process, in other words based on a model M of the physical reality. As part of the optimization, the simulation can be carried out iteratively, in a loop with changing charging parameters, as indicated by the dashed arrow. In this fashion, an optimized set of charging parameters P may be obtained. The criteria for the optimization may comprise an early readiness of the vehicle (at the required state of charge SOC), a low cost of energy, a low degradation of the battery due to charging or any combination thereof. The result is an optimized parameter set P for each of the charging cycles comprised in the modelled time window T_{M}. In an actual logistics scenario, many charging cycles for many vehicles may be comprised in this time window and many vehicles may be required to charge simultaneously by the routing plan RP. Therefore, the optimization may also be a multi-vehicle parameter optimization because the charging parameters of the individual charging processes may depend on each other and/or some target criteria may depend on the charging parameters of several vehicles in a complex fashion. For example, the total available electric power at one location may be limited, and the optimization may involve finding the best way to split the available power between the vehicles that need to be charged. Again, the simulation model M may be a rule-based model or a machine-learning model or a combination of the two. Similarly, the optimization algorithm OPT used to find the optimized parameter set P may be a rule-based algorithm or a machine-learning algorithm or an algorithm relying on a combination of these two approaches.

In any case, the optimized parameter set P obtained from the modelling step 30 is used as input for the implementation step 40, together with the real-time data comprised in the corresponding further input data set IN. In other words, the implementation of the charging process 40 is carried out based on the optimized parameter set P (e.g. specifying time-dependent target set points for the charging cycles of the individual vehicles), but also on the actual evolution of external input data IN which influence the system, such as temperatures and tariffs and available electrical power. As the real input data IN influence the physical state of the system, the actual set points SP determined and applied by the smart charging control algorithm SCC may differ slightly from the optimized parameters P as determined by the modelling step 30. The corresponding control loop and the time-dependent physical evolution of the system is indicated by the dotted arrow within step 40. In summary, the simulation-based optimization of the charging parameters P with sufficient lead time Δt30 enables the charging of a multi-vehicle fleet with a better overall trade-off between the conflicting goals of vehicle readiness, energy cost and/or battery health. In particular, the achieved trade-off will typically more favorable compared to a charging method where an optimization is performed with real-time data alone.

Independent of the grammatical term usage within the above description, individuals with male, female or other gender identities are included within the term.

### Reference Numerals

- 10: receiving step
- 20: simulation step (long-term estimation)
- 30: simulation and optimization step (intermediate term modelling)
- 40: real-time implementation
- F: fleet of vehicles
- A: electric vehicle
- B: electric vehicle
- C: charger
- C_{A1},C_{A2}: charging periods for vehicle A
- C_{B}: charging period for vehicle B
- CP,CP': charging plans
- I1,I2,...: input values
- IN: set of input values
- IN_{L}, IN_{M}, IN_{S}: sets of input values
- L1, L2: locations (logistics centers)
- L_{L}, L_{M}, L_{S}: feedback loops
- M: model
- P: optimized charging parameters
- O1,O2,...: output values
- OP: fleet operator
- OPT: optimization algorithm
- OUT: set of output values
- RP: route plan
- S1: planning system
- S2: charging system
- SCC: smart charging control
- SOC,SOC': required state of charge
- SP: set points
- t: time axis
- t_{d}: departure time
- t_{f}: finishing time
- T2C: time to charge
- t10,t20,t30: times of executions of method steps
- Δt10: lead time of step 10
- Δt20: lead time of step 20
- Δt30: lead time of step 30
- T_{L}: first time window
- T_{M}: second time window
- T_{S}: third time window
- T_{S0},T_{S1}: execution times for iterative implementation steps

## Claims

1. Computer-implemented method for charging a plurality of electric vehicles (A,B) within a fleet (F) of vehicles, the method comprising the steps of
- receiving (10) a routing plan (RP) for the fleet of vehicles for a first time window (T_{L}), wherein the routing plan (RP) comprises a set of schedules for the individual electric vehicles (A,B), the schedules including dwelling periods (C_{A1},C_{A2},C_{B}) during which the electric vehicles are available for charging,
- performing (30) a computer-implemented simulation of charging processes within the corresponding dwelling periods (C_{A1},C_{A2},C_{B}), the simulation being performed for a second time window (T_{M}) which is comprised within the first time window (T_{L}),
wherein a computer-implemented optimization algorithm is used to optimize the charging parameters (P) of the respective simulated charging process with respect to one or more economic, operational and/or electrical objectives, in particular comprising the duration of the individual charging process, the cost of charging and/or a battery degradation due to charging,
thereby determining optimized charging plans (CP') for the charging processes (C_{A1}, C_{B}) in the second time window (T_{M}),
and
- implementing (40) the optimized charging plans (CP') for the individual charging processes (C_{A1},C_{A2},C_{B}) of the electric vehicles (A,B) by a computer-implemented control algorithm (SCC), which adjusts the actual charging parameters (SP) on the basis of the previously optimized charging plans (CP') and real-time data (IN_{L}) for physical and/or economic quantities on a third time scale (T_{S}) which is shorter than the length of the second time window (T_{M}).

2. Method according to claim 1, comprising the additional step of
- performing (20) a computer-implemented simulation of the charging processes (C_{A1},C_{A2},C_{B}) comprised within the first time window (T_{L}), thereby determining at least an estimate for a required state of charge (SoC) and/or a required time to charge (T2C) for the individual charging processes ₍C_{A1},C_{A2},C_{B}).

3. Method according to claim 1 or 2, wherein a required state of charge (SoC, SoC') to be achieved during an individual planned charging process (C_{A1},C_{A2},C_{B}) for the associated electric vehicle (A,B) is predicted by the computer-implemented simulation, based on at least the vehicle type and the planned trip length following the respective charging process (C_{A1},C_{A2},C_{B}).

4. Method according to claim 3 wherein the prediction of the required state of charge (SoC, SoC') is further based on one or more of the following parameters:
- one or more properties of the vehicle type,
- one or more properties of the specific vehicle,
- an ambient temperature as a function of time,
- one or more topographical properties of the planned trip following the respective charging process,
- one or more properties of the planned payload of the planned trip,
- information on the expected traffic conditions of the planned trip,
- information on the driver of the planned trip.

5. Method according to claim 3 or 4, wherein the obtained prediction for the required state of charge (SOC, SOC') is used as input to the computer-implemented optimization of the associated charging processes.

6. Method according to any of the preceding claims,
- wherein the simulation within the second time window (T_{M}) is used to verify that the set of optimized charging parameters (P) will lead to a successful implementation of the respective charging process (C_{A1},C_{A2},C_{B}) within an allocated time period for this charging process within the routing plan (RP).

7. Method according to any of the previous claims, wherein the optimization within the second time window (T_{M}) is carried out by
- defining an objective function which comprises a term related to the duration of the individual charging process (C_{A1},C_{A2},C_{B}), a term related to the cost of charging and/or a term related to a battery degradation due to charging and
- extremizing the objective function based on the simulation of the charging processes within the second time window (T_{M}) by varying the charging parameters, thereby obtaining an optimized set of charging parameters (P) within the second time window.

8. Method according to any of the previous claims, wherein the charging parameters (P) optimized within the computer-implemented optimization comprise one or more of the following parameters:
- a time-dependent profile of the charging power,
- a trigger for starting a preconditioning process.

9. Method according to any of the previous claims, wherein the simulation within the second time window (T_{M}) is based on one on one or more of the following input values:
- information on the planned trip, in particular on topographic properties, payload and driver,
- information on the expected weather,
- information on the vehicle,
- information on the charger,
- an estimated value for the ambient temperature, in particular as a function of time,
- an estimated value for the energy tariff, in particular as a function of time.

10. Method according to any of the previous claims, wherein the electric vehicles (A,B) are trucks, busses and/or transport vehicles for use within an industrial facility.

11. Method according to any of the preceding claims, wherein the receiving, the simulation and/or the implementing steps are repeated iteratively for shifting time windows (T_{L},T_{M},T_{S}), as time (t) progresses.

12. Method according to claim 11, wherein the simulation (30) within the second time window (T_{M}) is repeated more frequently than the receiving step (10), and the implementing step (40) is repeated more frequently than this simulation (30).

13. Method according to any of the preceding claims, wherein the second time window (T_{M}) is shorter than the first time window (T_{L}) by at least a factor of two.

14. System for charging a plurality of electric vehicles (A,B) within a fleet (F) of vehicles, the system comprising
- receiving means configured to receive (10) a routing plan (RP) for the fleet (F) of vehicles for a first time window (T_{L}),
wherein the routing plan (RP) comprises a set of schedules for the individual electric vehicles (A,B), the schedules including dwelling periods (C_{A1},C_{A2},C_{B}) during which the electric vehicles are available for charging,
- simulation means configured for performing a computer-implemented simulation (30) of the associated charging processes within the corresponding dwelling periods (C_{A1},C_{A2},C_{B}), the simulation being performed for a second time window (T_{M}) which is comprised within the first time window (T_{L}),
wherein a computer-implemented optimization algorithm is used to optimize the charging parameters (P) of the respective simulated charging process with respect to one or more economic, operational and/or electrical objectives, in particular comprising the duration of the individual charging process, the cost of charging and/or a battery degradation due to charging,
thereby determining optimized charging plans (CP') for the charging processes (C_{A1}, C_{B}) in the second time window (T_{M}),
and
- controlling means configured for implementing (40) the optimized charging plans (CP') for the individual charging processes (C_{A1},C_{A2},C_{B}) of the electric vehicles (A,B) by a computer-implemented control algorithm (SCC), which adjusts the actual charging parameters (SP) on the basis of the previously optimized charging plans (CP') and real-time data (IN_{L}) for physical and/or economic quantities on a third time scale (T_{S}) which is shorter than the length of the second time window (T_{M}).

15. A computer program product with program code, which is stored in machine-readable form on a medium, for carrying out a method according to any one of claims 1 to 13, when the program code is executed on a computer.
